# EUROPÄISCHE PATENTSCHRIFT

(11) **EP 0 934 432 B1**
(45) Veröffentlichungstag und Bekanntmachung des Hinweises auf die Patenterteilung: **25.07.2001**
(21) Anmeldenummer: 97943658.1
(22) Anmeldetag: 20.10.1997
(51) Int. Cl.: C22B 34/32, C21B 3/06, C22B 7/04, C04B 5/06, C22C 33/04

(54) **VERFAHREN ZUM ENTCHROMEN UND/ODER ABREICHERN DES MgO-GEHALTES VON STAHLSCHLACKEN**
METHOD OF DE-CHROMING AND/OR DEPLETING THE MgO CONTENT OF STEEL SLAG
PROCEDE DE DECHROMAGE ET/OU D'APPAUVRISSEMENT DE LA TENEUR EN MgO DE LAITIER D'ACIER

(30) Priorität: 23.10.1996 AT 186096; 29.11.1996 AT 70696 U
(43) Veröffentlichungstag der Anmeldung: 11.08.1999
(73) Patentinhaber: HOLDERBANK FINANCIERE GLARUS AG, CH-8750 Glarus (CH)
(72) Erfinder: EDLINGER, Alfred, CH-5400 Baden (CH)
(74) Vertreter: Haffner, Thomas M.
(86) Internationale Anmeldenummer: AT9700224
(87) Internationale Veröffentlichungsnummer: WO9817832

(56) Entgegenhaltungen:
- WO-A-96/34989
- CN-A- 1 047 702
- GB-A- 619 886
- DATABASE WPI Section Ch, Week 9320 Derwent Publications Ltd., London, GB; Class M24, AN 93-165430 XP002052373 & SU 1 735 408 A (NORILSK MINING METAL COMBINE) , 23.Mai 1992
- DATABASE WPI Section Ch, Week 34 1979 Derwent Publications Ltd., London, GB; Class L02, AN 79-62179B XP002052374 & JP 54 087 605 A (KOBE STEEL LTD) , 12.Juli 1979
- DATABASE WPI Section Ch, Week 7847 Derwent Publications Ltd., London, GB; Class M24, AN 78-84650A XP002052375 & JP 53 119 210 A (KAWASAKI STEEL CORP) , 18.Oktober 1978
- PATENT ABSTRACTS OF JAPAN vol. 096, no. 005, 31.Mai 1996 & JP 08 026791 A (NIPPON STEEL CORP), 30.Januar 1996,
- PATENT ABSTRACTS OF JAPAN vol. 009, no. 108 (C-280), 11.Mai 1985 & JP 60 002605 A (SHIN NIPPON SEITETSU KK;OTHERS: 01), 8.Januar 1985,

## Beschreibung

Die Erfindung bezieht sich auf ein Verfahren zum Entchromen und/oder Abreichern des MgO-Gehaltes von Stahlschlacken.

Schlacken als Ausgangsprodukt oder Zuschlagsstoff bei der Zementherstellung sind bereits mehrfach vorgeschlagen worden. Aus der US-PS 4 174 974 ist es beispielsweise bekannt, Kohleschlacke in geschmolzenem Zustand mit mineralischen Substanzen und im besonderen Kalziumoxid, Kalziumhydroxid oder Kalziumcarbonat umzusetzen, um auf diese Weise Klinker bzw. Zement herzustellen. Der gleichen US-PS 4 174 974 ist bereits die Verwendung von Hochofenschlacke für vergleichbare Zwecke zu entnehmen. Auch die Beimengung von Schlacke in einen Drehrohrofen, welchem Kaolin, Bauxit und Kalk aufgegeben wurde, wurde bereits vorgeschlagen.

JP-A-08 026 791 beschreibt das Zumischen von mineralischen Stoffen zu flüssiger Stahlwerkschlacke aus der Herstellung von rostfreiem Stahl zwecks Wiedergewinnung von in der Schlacke enthaltenem Chrom. Die entchromte Schlacke wird als Anteil am Klinker bei der Zementherstellung verwendet.

Der umfangreichen Verwendung von Stahlschlacken als Zusatzstoff bei der Klinker- bzw. Zementherstellung steht in der Regel der hohe Gehalt von von Eisen verschiedenen Metallen in derartigen Stahlschlacken entgegen. Mit zunehmendem Einsatz von Schrott als Vormaterial für die Stahlherstellung steigt auch der Anteil der Legierungsmetalle in der Stahlschlacke. Insbesondere ein hoher Chromgehalt schließt derartige Schlacken als Rohmaterial bzw. Zuschlagsstoff weitestgehend aus. Bedingt durch die hohe Toxizität von CrVI-Salz werden für Baumaterialien nur äußerst geringe Mengen von CrVI toleriert.

Ein weiterer Nachteil der Verwendung von Stahlschlacken als Zusatzstoff bei der Klinker- bzw. Zementherstellung besteht in einem üblicherweise hohen MgO-Gehalt, welcher 10 bis 15 Gew.-% der Schlacke betragen kann. Bei der Zementhydratation wird MgO in Mg(OH)₂ (Brucit) umgewandelt, wobei aufgrund einer Volumensexpansion die Druckfestigkeit stark herabgesetzt wird. Aus diesem Grunde wird üblicherweise davon ausgegangen, daß der MgO-Gehalt im Klinker 6 Gew.-% nicht übersteigen soll.

Die Erfindung zielt nun darauf ab, Stahlschlacken auf einfachem Wege zu entchromen und/oder den MgO-Gehalt herabzusetzen und auf diese Weise in einfacher Weise für die Verwendung bei der Herstellung von Zementklinker einsetzbar zu machen. Zur Lösung dieser Aufgabe besteht das erfindungsgemäße Verfahren im wesentlichen darin, daß in die flüssige Stahlschlacke Sauerstoff in einem Ausmaß eingetragen wird, welches ausreicht, um Eisen quantitativ zu Eisenoxid und wenigstens 5 Gew.% des in der Schlacke enthaltenen Eisenoxides zu Eisen-III-oxid überzuführen, daß die erhaltene oxidierte Schlacke erstarrt und zerkleinert wird, worauf die gebildeten paramagnetischen Anteile ("Magnetit", Fe₃O₄) magnetisch separiert werden und von der entchromten Schlacke abgetrennt werden. Dadurch, daß unmittelbar die flüssige Stahlschlacke durch Einbringen von Sauerstoff gefrischt wird, wird zum einen erreicht, daß das in der Stahlschlacke enthaltene Resteisen quantitativ oxidiert wird, sodaß die nachfolgende Zerkleinerung, beispielsweise durch Granulieren im Wasser oder unter Verwendung von Dampf, gefahrlos vorgenommen werden kann. Dadurch, daß nun nicht nur das verbleibende Eisen zu Eisenoxid oxidiert wird, sondern weiters das in der Stahlschlacke als Eisen-II-oxid vorliegende Eisenoxid zumindest teilweise in Eisen-III-oxid übergeführt wird, wird eine Spinellphase ausgebildet, in welche Chrom nahezu quantitativ bei der Kristallisation eingebaut wird. Beim Erstarren eines derartigen teilweise zu Eisen-III oxidierten Stahlschlackenderivates wird somit ein bestimmter Mindestanteil von Magnetit gebildet, in dessen Spinellstruktur Chrom quantitativ eingebaut wird. Das Eisen-III-oxid kann aufgrund seiner paramagnetischen Eigenschaften in einfacher Weise nach der Zerkleinerung magnetisch abgetrennt werden, sodaß nach dem Magnetscheider eine von Chrom befreite Stahlschlacke erhalten wird, welche kein freies Eisen mehr enthält. Überraschenderweise wurde nun gefunden, daß auch MgO in hohem Maße neben Cr₂O₃ in Magnetit eingebaut wird, sodaß gleichzeitig der MgO-Gehalt durch magnetische Abtrennung des Magnetites wesentlich verringert werden kann. Für den Fall von vanadiumoxidhaltigen Schlacken wurde gefunden, daß auch Vanadium weitestgehend quantitativ in die Spinellstruktur eingebaut wird, sodaß hier eine Anreicherung erfolgt, welche eine wirtschaftliche Rückgewinnung erlaubt. Ein derartiges gereinigtes entchromtes Stahlschlackenderivat eignet sich nun als Einsatzmaterial für die Herstellung von Klinker, ohne daß ein zu hoher Chromatgehalt in Klinker bzw. in daraus hergestelltem Zement befürchtet werden muß.

Mit Vorteil wird das erfindungsgemäße Verfahren hiebei so durchgeführt, daß Sauerstoff in Form von Luft und/oder Reinsauerstoff in die flüssige Schlacke eingeblasen wird. Da flüssige Schlacke eingesetzt wird, läßt sich ein derartiger Reinigungsschritt unmittelbar im Stahlwerk im Anschluß an die Stahlherstellung vornehmen, wobei gleichzeitig eine Spinellphase gewonnen wird, welche sich als Ausgangsprodukt für die Ferro-Chrom-Herstellung eignet.

Gemäß einer bevorzugten Weiterbildung des erfindungsgemäßen Verfahrens wird so vorgegangen, daß die Oxidation bis zur Ausbildung eines Fe304-Gehaltes der Schlacke zwischen 5 und 20 Gew.% durchgeführt wird. Auf diese Weise wird sichergestellt, daß Chrom quantitativ magnetisch abgetrennt werden kann, da es quantitativ in die Spinellstruktur des Magentits eingebaut wird.

Mit Rücksicht auf den Umstand, daß durch das Frischen der Stahlschlacke mit Sauerstoff bzw. Luft ein eisenfreies Produkt erzielt wird, kann die Schlacke, wie es einer bevorzugten Weiterbildung des erfindungsgemäßen Verfahrens entspricht, gefahrlos nach der Oxidation mit Wasser und/oder Dampf granuliert werden. Metallisches Eisen würde in diesem Falle die Gefahr einer Knallgasbildung und damit die Gefahr von Explosionen mit sich bringen.

Um sicherzustellen, daß Chrom quantitativ in der Spinellphase gelöst wird, wird mit Vorteil das erfindungsgemäße Verfahren so durchgeführt, daß die Basizität der Stahlschlacke auf Werten CaO/SiO₂ größer 2,5 gehalten wird. Stahlschlacken weisen üblicherweise eine Basizität zwischen 2,5 und 4,8 auf, wobei bei Basizitäten von größer als 2,5 CrVI nahezu unlöslich in der kalzium-silikatischen Phase ist und sich bevorzugt in den Spinellkristallen einlagert. Aufgrund der starken Anreicherung des Chroms in der paramagnetischen Magnetit-Spinellphase kann diese Phase nach der Magnetscheidung bevorzugt als Rohmaterial für die Chromherstellung eingesetzt werden. Die entchromte Stahlschlacke eignet sich insbesondere für den Einsatz in einem Drehrohrofen für die Herstellung von Zementklinker.

Übliche Stahlschlackenzusammensetzungen lassen sich der nachfolgenden Tabelle entnehmen, wobei die Zahlenangaben durchwegs in Gew.% sind und der Fehlbetrag auf 100 Gew.% nicht bestimmte Verunreinigungen darstellt.

| Probe | 1 | 2 | 3 | 4 | 5 | 6 | Durchschnitt |
|---|---|---|---|---|---|---|---|
| SiO₂ | 14,92 | 13,80 | 13,26 | 13,26 | 14,44 | 13,91 | 13,93 |
| Al₂O₃ | 7,37 | 7,01 | 6,51 | 6,21 | 7,70 | 6,51 | 6,89 |
| FeO | 25,31 | 25,31 | 27,02 | 26,94 | 25,95 | 26,09 | 26,10 |
| CaO | 34,10 | 37,07 | 37,07 | 32,18 | 34,28 | 34,77 | 34,91 |
| MgO | 6,54 | 7,54 | 7,33 | 6,75 | 7,38 | 6,41 | 6,99 |
| SO₃ | 0,23 | 0,26 | 0,11 | 0,16 | 0,19 | 0,08 | 0,17 |
| Cr₂O₃ | 1,27 | 1,19 | 1,22 | 1,20 | 1,07 | 1,01 | 1,16 |
| Mn₂O₃ | 7,00 | 6,63 | 6,17 | 6,54 | 6,62 | 6,54 | 6,58 |
| Na₂O | 0,13 | 0,12 | 0,10 | 0,17 | 0,14 | 0,07 | 0,12 |
| K₂O | 0,02 | 0,02 | 0,02 | 0,03 | 0,02 | 0,01 | 0,02 |
| ZnO | 0,07 | 0,13 | 0,02 | 0,02 | 0,02 | 0,01 | 0,05 |
| SrO | 0,04 | 0,04 | 0,02 | 0,04 | 0,04 | 0,04 | 0,04 |

Den üblichen Stahlschlackenzusammensetzungen läßt sich unschwer entnehmen, daß ein Cr₂O₃-Gehalt von im Mittel 1,16 Gew.% den Einsatz nur geringer Mengen an Stahlschlacke bei der konventionellen Klinkerherstellung erlaubt. Durch die Durchführung des erfindungsgemäßen Verfahrens kann der Cr₂O₃-Gehalt auf Werte herabgesetzt werden, welche weit unterhalb der Toleranz für den CrVI-Gehalt in aus einem derartigen Vormaterial hergestellten Klinker liegt. Das oxidierte Chrom wird bei dem erfindungsgemäßen Verfahren quantitativ in den Magnetit eingebaut und ist in der Schlackenmineralphase unlöslich.

Für die Durchführung der Magnetscheidung ist es vorteilhaft, die Schlacke entsprechend zu zerkleinern, wobei eine mechanische Zerkleinerung auf Partikelgrößen kleiner als 5 cm prinzipiell ausreicht. Das abgesiebte Produkt einer derartig zerkleinerten oxidierten Schlacke kann somit unmittelbar durch Magnetscheidung in eine chromreiche und eine chromfreie Phase getrennt werden.

Das so hergestellte Schlackenprodukt weist bereits gute hydraulische Eigenschaften auf und kann den Klinkeranteil ohne Qualitätseinbußen bis zu 35 % im Mischzement ersetzen.

### Beispiel 1:

Als Verfahrensaggregat diente eine typische sekundärmetallurgische Pfanne, in die über poröse Bodenspülsteine technischer Sauerstoff eingeleitet wurde. Die dabei auftretende Verbrennungs-Enthalpie des Eisens bzw. Eisen-II-oxides reichte aus, um die Wärmeverluste der "Frisch-Pfanne" (Strahlung, Konvektion) mehr als auszugleichen. Falls ausschließlich mit Luft gefrischt werden soll, muß zusätzlich Energie in Form von Brennstoff zugeführt werden. Luft/O₂ Gemische sind gleichfalls verwendbar.

Im vorliegenden Fall wurde mit technisch reinem Sauerstoff gefrischt.

| LD-Schlacken-Analyse | |
|---|---|
| Komponente | Anteil (%) |
| SiO₂ | 13 |
| Al2O3 | 6 |
| FeO | 26 |
| CaO | 34 |
| MgO | 4 |
| SO₃ | 0,2 |
| Cr₂O₃ | 2 |
| MnO | 7 |
| Na₂O | 0,1 |
| K₂O | 0,5 |
| (Fe)ₘₑₜ | 7 |
| Rest übliche Verunreinigungen | |

In die 1580° C heiße, dünnflüssige Stahlschlacke wurde über Bodenspülsteine Sauerstoff eingeblasen. Der Sauerstoff reagierte schnell und quantitativ mit den Eisenspezies.

Sauerstoffbilanz für 1 t Stahlschlacke:
Um die 70 kg (Fe)met der LDS zu 90 kg FeO zu oxidieren, benötigt man 20 kg O₂. Somit erhöht sich der FeO-Gehalt der LDS auf ca. 35 %.
10 % oder 35 kg FeO werden mittels 4 kg 02 zu 39 kg Fe₂O₃ weiteroxidiert.

Diese 39 kg Fe₂O₃ reagieren mit 18 kg FeO zu 57 kg Fe₃O₄ (Magnetit). In dieses Magnetit wird praktisch quantitativ Chrom spinellartig eingebaut (Mischspinell: FeCr₂O₄ x Fe₃O₄). Der Spinell scheidet sich bereits aus der Schlackenschmelze aus und kann bereits teilweise durch Aussedimentieren aus der Schlackenschmelze entfernt werden.

Die quantitative Spinellzusammensetzung ergibt folgende Tabelle:

| Komponente | Anteil (%) |
|---|---|
| Fe | 53 |
| Cr | 17 |
| O (Sauerstoff) | 30 |

Nach dem Erstarren und Zerkleinern wurde die Spinellfraktion magnetisch abgetrennt. Dieser Spinell stellt ein hochwertiges Chromerz dar und kann durch konventionelle Reduktion in ein hochprozentiges Ferro-Chromium (Carburé) umgewandelt werden.

| FeCr % | |
|---|---|
| Fe | 76 |
| Cr | 24 |

Die verbliebene Schlackenschmelze kann anschließend sehr vorteilhaft dampfgranuliert werden und weist noch einen Restchromgehalt von ca. 500 ppm Cr (im verbliebenen, nicht aussedimentierten Magnetit) auf. Dieses Material hat bereits gute hydraulische Eigenschaften.

### Beispiel 2:

In analoger Weise wurde eine Schlacke mit nachfolgender Analyse gefrischt:

| Analyse (%) | |
|---|---|
| SiO₂ | 9,5 |
| CaO | 44,6 |
| MgO | 7,4 |
| Al₂O₃ | 0,6 |
| MnO | 6,7 |
| TiO₂ | 0,3 |
| Cr₂O₃ | 1,4 |
| SO₃ | 0,2 |
| Na₂O | 0,1 |
| FeO | 28,7 |
| Summe | 99,5 |
| Rest übliche Verunreinigungen | |

Diese Schlacke war praktisch metalleisenfrei und bei 1480° dünnflüssig. Der von unterhalb des Schlackenbades zugeführte Sauerstoff führte zu einem starken Ansteifen der Schlacke durch die Magnetit-(Spinell)-Bildung.

Aus dem gekühlten Oxid wurde der Magnetit (Spinell) magnetisch entfernt. Der Magnetit diente hiebei der Anreicherung von MnO, MgO, Al₂O₃, Cr₂O₃, FeO/Fe₂O₃.

Die "mineralische Phase", welche einen Einsatzstoff für die Zementindustrie darstellt , wies folgende Zusammensetzung auf:

| Mineralische Phase (%) | |
|---|---|
| SiO₂ | 13 |
| CaO | 72 |
| FeO | 9 |

Der Rest bestand aus Spuren von MgO (< 2%), MnO, TiO₂, Cr₂O₃ (< 500 ppm), SO₂, Na₂O. Der gebildete Spinell setzte sich wie folgt zusammen:

| Spinell | |
|---|---|
| Mg | 12 Gew.-% |
| Al | 1 Gew.-% |
| Mn | 14 Gew.-% |
| Cr | 3 Gew.-% |
| Fe | 42 Gew.-% |
| O | 28 Gew.-% |

Für den Fall, daß Vanadium aus der Schlacke in den Spinell eingebaut wurde, kann dieses auf konventionellem Wege durch kohlenstoffreie Reduktion, beispielsweise durch Reduktion mit Aluminium, rückgewonnen werden, wobei im Spinell Anreicherungen von etwa 3 Gew.-% bei gewöhnlichen Stahlschlacken beobachtet wurden. Ein Spülen darf in diesen Fällen nicht mit N₂ erfolgen, um Nitritbildungen hintanzuhalten.

## Patentansprüche

1. Verfahren zum Entchromen und/oder zum Absenken des MgO-Gehaltes von Stahlschlacken, dadurch gekennzeichnet, daß in die flüssige Stahlschlacke Sauerstoff in einem Ausmaß eingetragen wird, welches ausreicht, um Eisen quantitativ zu Eisenoxid und wenigstens 5 Gew.% des in der Schlacke enthaltenen Eisenoxides zu Eisen-III-oxid überzuführen, daß die erhaltene oxidierte Schlacke erstarrt und zerkleinert wird, worauf die gebildeten paramagnetischen Anteile magnetisch separiert werden und von der entchromten Schlacke abgetrennt werden.

2. Verfahren nach Anspruch 1, dadurch gekennzeichnet, daß Sauerstoff in Form von Luft und/oder Reinsauerstoff in die flüssige Schlacke eingeblasen wird.

3. Verfahren nach Anspruch 1 oder 2, dadurch gekennzeichnet, daß die Oxidation bis zur Ausbildung eines Fe₃O₄-Gehaltes der Schlacke zwischen 5 und 20 Gew.% durchgeführt wird.

4. Verfahren nach Anspruch 1, 2 oder 3, dadurch gekennzeichnet, daß die Schlacke nach der Oxidation mit Wasser und/ oder Dampf granuliert wird.

5. Verfahren nach einem der Ansprüche 1 bis 4, dadurch gekennzeichnet, daß die Basizität der Stahlschlacke auf Werten CaO/ SiO₂ größer 2,5 gehalten wird.

6. Verfahren nach einem der Ansprüche 1 bis 5, dadurch gekennzeichnet, daß die paramagnetische Magnetit-Spinellphase als Rohmaterial für die Chromherstellung eingesetzt wird.

7. Verfahren nach einem der Ansprüche 1 bis 6, dadurch gekennzeichnet, daß die entchromte Stahlschlacke einem Drehrohrofen für die Herstellung von Zementklinker aufgegeben wird.

8. Verfahren nach einem der Ansprüche 1 bis 7, dadurch gekennzeichnet, daß ein in die Spinellphase eingebautes Vanadiumoxid durch kohlenstoffreie Reduktion, beispielsweise mit Aluminium, rückgewonnen wird.

## Claims

1. A method for dechroming and/or lowering the MgO content of steel slags, characterized in that oxygen is introduced into the liquid steel slag to an extent sufficient to convert iron quantitatively to iron oxide and at least 5 wt.-% of the iron oxide contained in the slag to iron-III-oxide, that the oxidized slag obtained is solidified and disintegrated, whereupon the paramagnetic portions formed are magnetically separated and eliminated from the dechromed slag.

2. A method according to claim 1, characterized in that oxygen is blown into the liquid slag in the form of air and/or pure oxygen.

3. A method according to claim 1 or 2, characterized in that oxidation is continued until the formation of an Fe₃O₄ content of the slag ranging between 5 and 20 wt.-%.

4. A method according to claim 1, 2 or 3, characterized in that the slag is granulated with water and/or vapor after oxidation.

5. A method according to any one of claims 1 to 4, characterized in that the basicity of the steel slag is maintained at CaO/SiO₂ values greater than 2.5.

6. A method according to any one of claims 1 to 5, characterized in that the paramagnetic magnetite-spinel phase is used as a raw material for the production of chromium.

7. A method according to any one of claims 1 to 6, characterized in that the dechromed steel slag is charged into a rotary tubular kiln for the production of cement clinker.

8. A method according to any one of claims 1 to 7, characterized in that vanadium oxide incorporated in the spinel phase is recovered by carbon-free reduction, for instance, by the aid of aluminum.

## Revendications

1. Procédé pour déchromer des scories d'acier et/ou pour en abaisser la teneur en MgO, caractérisé en ce que de l'oxygène est introduit dans la scorie liquide d'acier, dans une proportion qui est suffisante pour transformer du fer, en quantité, en oxyde de fer et au moins 5% en poids de l'oxyde de fer, contenu dans la scorie, en oxyde ferrique, en ce que la scorie oxydée obtenue est solidifiée et concassée, sur quoi les fractions paramagnétiques formées sont isolées magnétiquement et sont séparées de la scorie déchromée.

2. Procédé selon la revendication 1, caractérisé en ce que l'oxygène est insufflé, sous forme d'air et/ou d'oxygène pur, dans la scorie liquide.

3. Procédé selon la revendication 1 ou 2, caractérisé en ce que l'oxydation est menée à bien jusqu'à l'établissement, dans la scorie, d'une teneur en Fe₃O₄ entre 5 et 20% en poids.

4. Procédé selon lu revendication 1, 2 ou 3, caractérisé en ce que la scorie est, après l'oxydation, mise en granulés à l'aide d'eau et/ou de vapeur.

5. Procédé selon l'une des revendications 1 à 4, caractérisé en ce que la basicité de la scorie d'acier est maintenue à des valeurs de CaO/SiO₂ supérieures à 2,5.

6. Procédé selon l'une des revendications 1 à 5, caractérisé en ce que la phase paramagnétique de spinelle de magnétite est utilisée comme matière première pour la production de chrome.

7. Procédé selon l'une des revendications 1 à 6, caractérisé en ce que la scorie d'acier déchromée est chargée dans un four tubulaire rotatif pour la production de clinker de ciment.

8. Procédé selon l'une des revendications 1 à 7, caractérisé en ce qu'un oxyde de vanadium, intégré dans la phase de spinelle, est récupéré par une réduction en l'absence de carbone, faite par exemple avec de l'aluminium.
